# EUROPEAN PATENT SPECIFICATION

(11) **EP 4 001 078 B1**
(45) Date of publication and mention of the grant of the patent: **17.01.2024**
(21) Application number: 21208761.3
(22) Date of filing: 17.11.2021
(51) Int. Cl.: B62J 43/16

(54) **BATTERY**
BATTERIE
BATTERIE

(30) Priority: 24.11.2020 JP 2020194484
(43) Date of publication of application: 25.05.2022
(73) Proprietor: Suzuki Motor Corporation, Shizuoka 432-8611 (JP)
(72) Inventor: NAGAYA, Keita, Hamamatsu-shi, Shizuoka, 432-8611 (JP); YUKINAGA, Kohei, Hamamatsu-shi, Shizuoka, 432-8611 (JP)
(74) Representative: Haseltine Lake Kempner LLP

(56) References cited:
- US-A1- 2013 153 323
- Electricbikereview.Com: "2019 Trek Electric Bikes, Powerfly Line Deep Dive", , 31 December 2018 (2018-12-31), XP055900885, Retrieved from the Internet: URL:https://www.youtube.com/watch?v=cvTJi4 QKtDA [retrieved on 2022-03-14]

## Description

### TECHNICAL FIELD

The present invention relates to an electric straddle-type vehicle comprising a vehicle body frame and a battery.

### BACKGROUND ART

In recent years, an electric straddle-type vehicle that travels on electric power has been developed. As the electric straddle-type vehicle, a scooter-type vehicle in which a battery and the like are accommodated below a seat is known (for example, see Patent Literature 1). In the straddle-type vehicle disclosed in Patent Literature 1, a pair of left and right seat frames are provided as a vehicle body frame, and the battery is installed inside the pair of seat frames. A battery module and a circuit component are accommodated in a battery case, and a plurality of fixing portions on an outer surface of the battery case are screwed to the pair of seat frames via a bracket or the like.

US 2013/0153323 A1 shows the preamble of claim 1, and discloses an inside of a swing arm that pivotally supports a rear wheel of an electric two-wheeled vehicle and that is freely swingably attached to a vehicle body, a battery, an electric motor for driving the rear wheel, and a board serving as a control device for controlling the electric motor are equipped. Coupling a throttle grip and a throttle position sensor by physical transmission means therebetween allows a configuration so that a turning angle of the throttle grip can be detected, and the throttle position sensor is attached to the board. The board is disposed with a planar portion oriented in a vehicle width direction.

### CITATION LIST

### PATENT LITERATURE

Patent Literature 1: JP-A-2017-081324

### SUMMARY OF INVENTION

### TECHNICAL PROBLEM

When the circuit component disclosed in Patent Literature 1 is broken, if the battery case is not detached from the vehicle body frame, a replacement operation of the circuit component inside the battery case cannot be performed. Therefore, it is troublesome for an operator to perform the replacement operation of the circuit component.

The present invention has been made in view of the above points, and an object of the present invention is to provide a battery capable of improving workability of a replacement operation of a circuit component by an operator.

### SOLUTION TO PROBLEM

The scope of the present invention is defined by the appended claims.

### ADVANTAGEOUS EFFECTS OF INVENTION

According to the battery of an aspect of the present invention, when the cover member is detached from a side of the vehicle body frame, the circuit component is exposed to the outside from the opening of the battery case in the side view. Even if the battery is not detached from the vehicle body frame at the time of breakage of the circuit component, the circuit component can be replaced through the opening of the battery case by detaching the cover member from the battery case. Therefore, an operator can easily replace the circuit component, and workability of a replacement operation of the circuit component can be improved. Although a rigidity in a vicinity of the opening of the battery case is reduced, since the battery is protected from the outside by the vehicle body frame, a strong external force does not directly act on the vicinity of the opening of the battery case.

### BRIEF DESCRIPTION OF DRAWINGS

[Fig. 1] Fig. 1 is a side view of a straddle-type vehicle according to the present embodiment.
[Fig. 2] Fig. 2 is a right side view of a vehicle body frame and an electric device according to the present embodiment.
[Fig. 3] Fig. 3 is a perspective view of the vehicle body frame and a battery according to the present embodiment as viewed from a right front side.
[Fig. 4] Fig. 4 is a perspective view of the vehicle body frame and the battery according to the present embodiment as viewed from a left front side.
[Fig. 5] Fig. 5 is a left side view of a case half body on a right side according to the present embodiment.
[Fig. 6] Fig. 6 is a left side view of the battery from which a case half body on a left side is detached according to the present embodiment.
[Fig. 7] Fig. 7 is a plan view of the battery from which the case half body on the left side is detached according to the present embodiment.
[Fig. 8] Fig. 8 is a plan view of the vehicle body frame and the battery according to the present embodiment.
[Fig. 9] Fig. 9 is a left side view of the vehicle body frame and the battery according to the present embodiment.
[Fig. 10] Fig. 10 is a left side view in which a fuse cover is detached from Fig. 9.

### DESCRIPTION OF EMBODIMENTS

A battery according to an aspect of the present invention is fixed inside a vehicle body frame of an electric straddle-type vehicle. A battery module to which electric power for traveling is charged and a circuit component connected to the battery module are accommodated in a battery case of the battery. The battery case is formed with an opening at a position avoiding the vehicle body frame in a side view, and the opening is covered with a cover member detachably attached to the battery case. Even if the battery is not detached from the vehicle body frame at the time of breakage of the circuit component, the circuit component exposed to the outside can be replaced from the opening of the battery case by detaching the cover member from a side of the vehicle body frame. Therefore, an operator can easily replace the circuit component, and workability of a replacement operation of the circuit component can be improved. Although a rigidity in a vicinity of the opening of the battery case is reduced, since the battery is protected from the outside by the vehicle body frame, a strong external force does not directly act on the vicinity of the opening of the battery case.

### [Example]

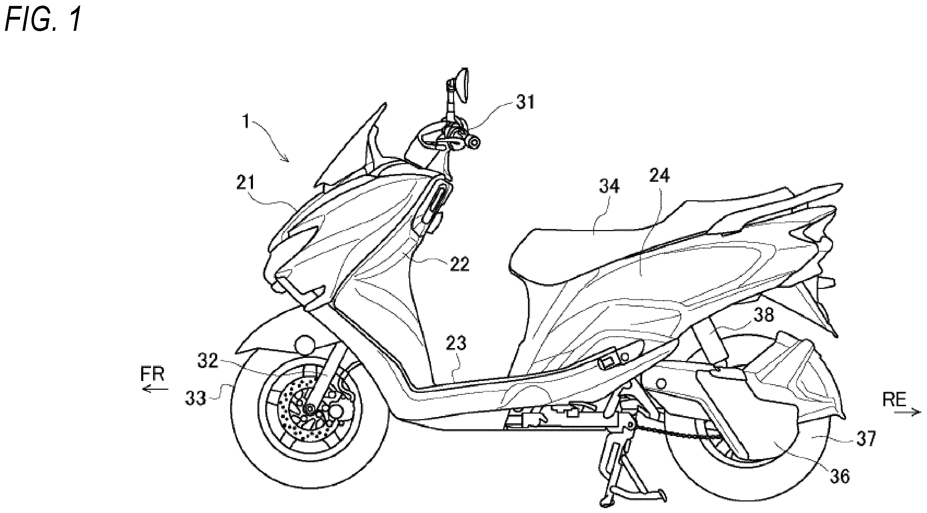

Hereinafter, the present embodiment will be described in detail with reference to the accompanying drawings. In the present embodiment, the straddle-type vehicle is a straddle-type vehicle of a scooter type, but the straddle-type vehicle may be a straddle-type vehicle of an electric or hybrid type. In addition, in the following drawings, an arrow FR indicates a vehicle front side, an arrow RE indicates a vehicle rear side, an arrow L indicates a vehicle left side, and an arrow R indicates a vehicle right side. Fig. 1 is a left side view of the straddle-type vehicle according to the present embodiment.

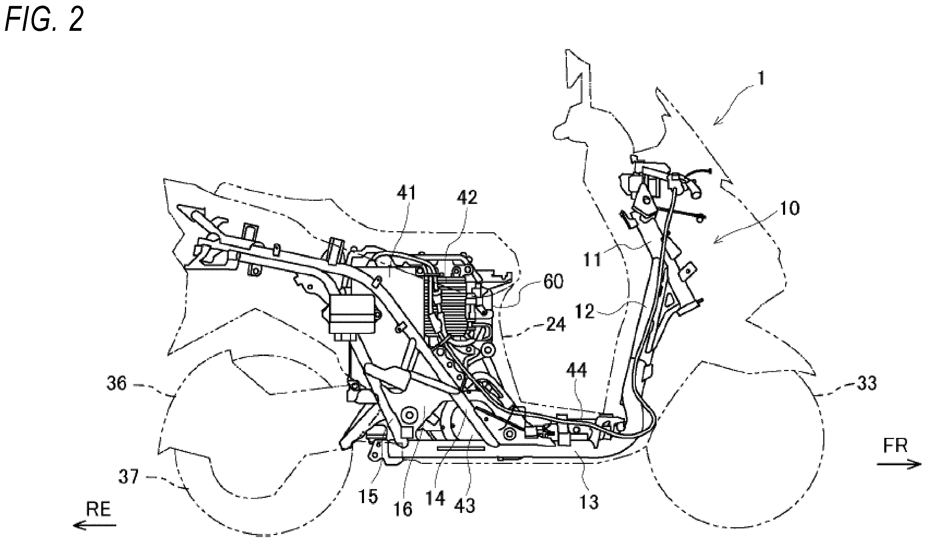

As shown in Fig. 1, a straddle-type vehicle 1 of a scooter type is formed by attaching various covers to an underbone type vehicle body frame 10 (see Fig. 2) as a vehicle body exterior. A front frame cover 21 is provided on a front side of a vehicle, and a leg shield 22 that protects legs of a rider is provided on a rear side of the front frame cover 21. A footboard 23 extends rearward from a lower end of the leg shield 22, and a seat frame cover 24 is provided on a rear side of the footboard 23. A foot rest space for the rider is formed in front of a seat 34 by the leg shield 22 and the footboard 23.

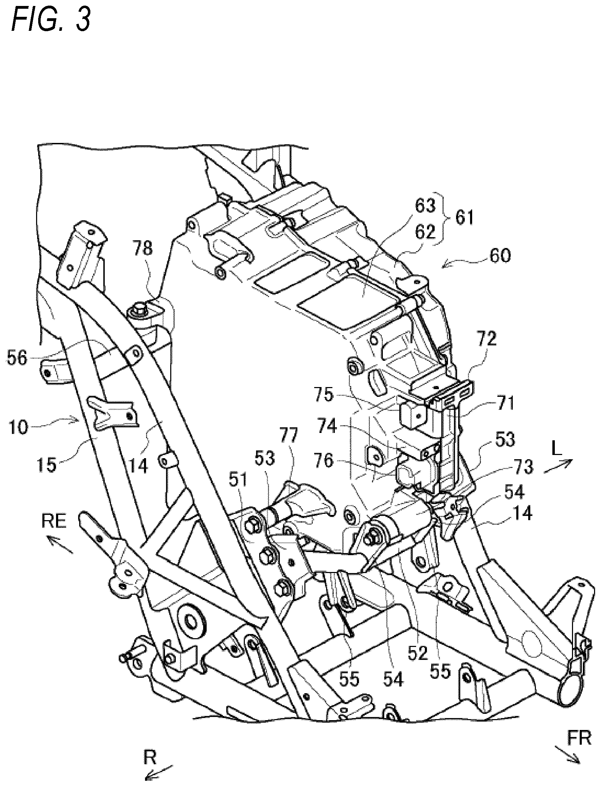

A handle 31 is provided on an upper side of the front frame cover 21, and a front wheel 33 is rotatably supported on a lower side of the front frame cover 21 via a pair of front forks 32. The seat 34 is provided on an upper side of a seat frame cover 24, and a swing arm (not shown) covered by a swing arm cover 36 is provided on a lower side of the seat frame cover 24. A rear wheel 37 is rotatably supported at a rear portion of the swing arm, and a rear portion of the swing arm is connected to the vehicle body frame 10 via a suspension 38. A battery 60 (see Fig. 3) is accommodated below the seat 34.

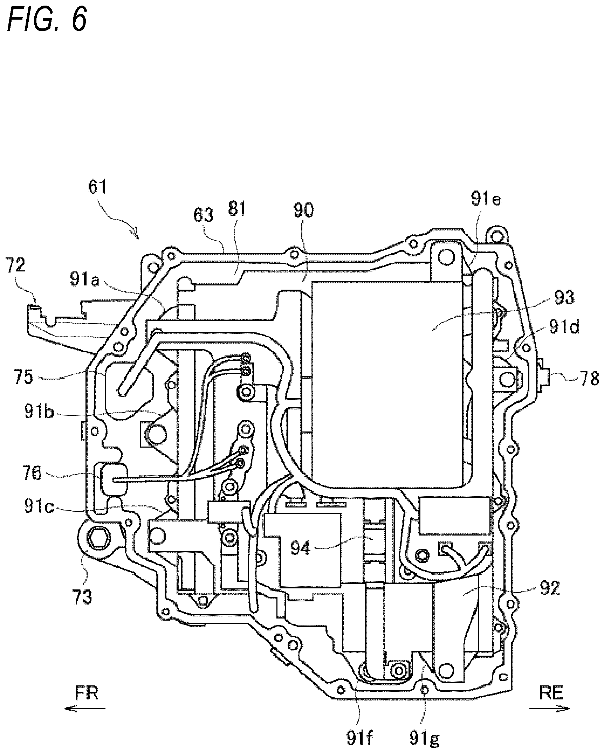

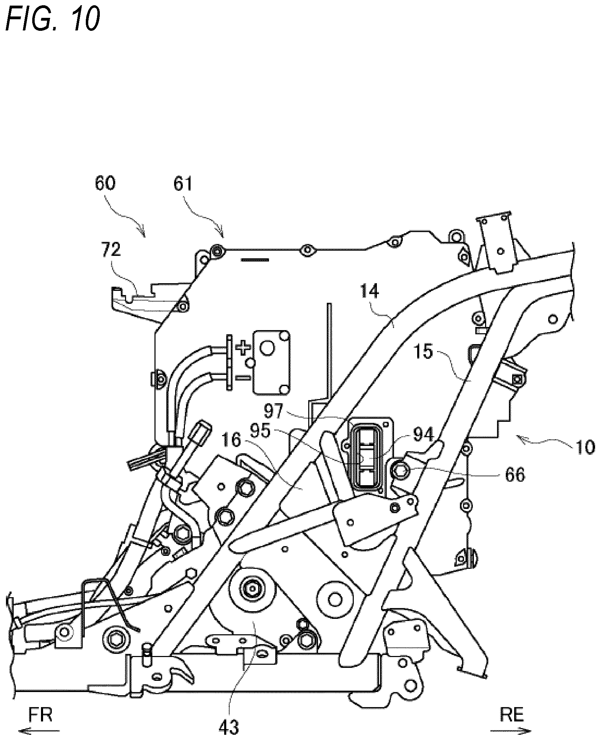

The battery 60 is provided with a fuse 94 to be cut by an overcurrent as a circuit component of a high voltage circuit (see Fig. 6). When the fuse 94 is cut, the fuse 94 inside a battery case 61 cannot be replaced unless the battery case 61 is detached from the vehicle body frame 10. Therefore, in the battery case 61 of the present embodiment, an opening 95 for a replacement operation that exposes the fuse 94 is formed (see Fig. 10). In general, a service plug that cuts off the high voltage circuit must be provided in the battery, but in the present embodiment, the high voltage circuit can be cut off by detaching the fuse 94 instead of the service plug.

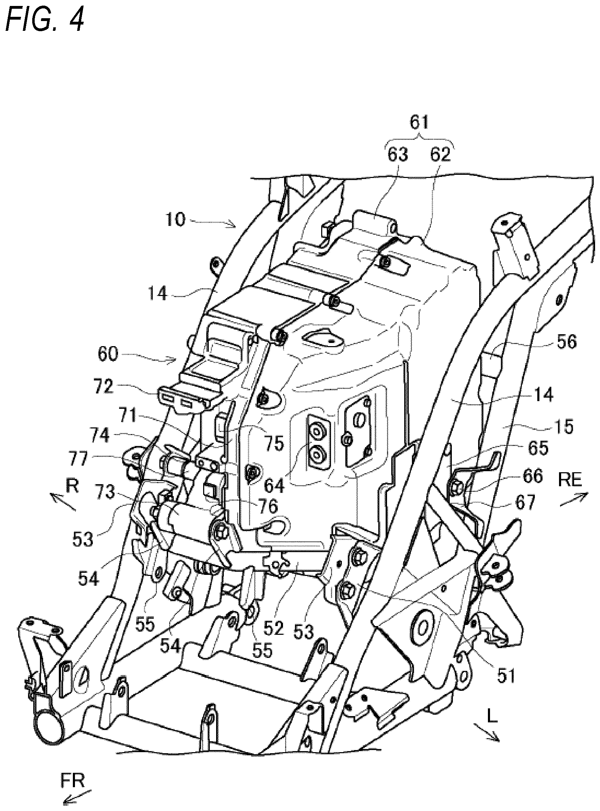

Hereinafter, a vehicle body frame and a battery of the present embodiment will be described with reference to Figs. 2 to 4. Fig. 2 is a right side view of the vehicle body frame and an electric device according to the present embodiment. Fig. 3 is a perspective view of the vehicle body frame and the battery according to the present embodiment as viewed from a right front side. Fig. 4 is a perspective view of the vehicle body frame and the battery according to the present embodiment as viewed from a left front side. Figs. 3 and 4 show a state in which the electric device other than the battery is detached from the vehicle body frame.

As shown in Fig. 2, a head pipe 11 into which a steering shaft (not shown) is inserted is provided in a front portion of the vehicle body frame 10. A front frame 12 extends downward from the head pipe 11, and a pair of lower frames 13 extend rearward from a lower portion of the front frame 12. A pair of seat frames (upper side frames) 14 rise obliquely rearward from substantially middle portions of the pair of lower frames 13, and a pair of support frames (lower side frames) 15 rise obliquely rearward from rear portions of the pair of lower frames 13. Rear portions of the pair of support frames 15 are connected to rear portions of the pair of seat frames 14 from below.

An accommodation space of the battery 60 is formed between the pair of seat frames 14 and the pair of support frames 15, that is, inside the seat frame cover 24. A charger 41 that converts power source power into DC power having a predetermined voltage, the battery 60 that is charged with the DC power from the charger 41, and a DC-DC converter 42 that steps down a voltage of the DC power are installed on an upper side of an installation space. A motor 43 that is driven by AC power is installed in a lower portion of the installation space. An inverter 44 that converts the DC power into AC power is installed in front of the motor 43, and the motor 43 is connected to the battery 60 via the inverter 44.

The pair of seat frames 14 and the pair of support frames 15 are connected to each other in a front-rear direction via a pair of pivot brackets 16. The swing arm (not shown) is connected to the pair of pivot brackets 16 so as to be swingable in an upper-lower direction, and the swing arm cover 36 is attached to the swing arm as described above. A sprocket (not shown) and a chain (not shown) of the motor 43 are covered by the swing arm cover 36. Electric power of the battery 60 is supplied to the motor 43, and a drive force is output from the motor 43 to the rear wheel 37 via the sprocket and the chain.

As shown in Figs. 3 and 4, the accommodation space of the battery 60 is formed below the seat 34 (see Fig. 1) between the pair of seat frames 14 and the pair of support frames 15. A pair of holder plates 51 are provided on the seat frames 14, and a front side bridge 52 extending in a vehicle width direction is fixed to the pair of holder plates 51. The pair of seat frames 14 are connected via the pair of holder plates 51 and the front side bridge 52. The battery 60 is attached to an upper side of the front side bridge 52, and the motor 43 (see Fig. 2) is attached to a lower side of the front side bridge 52.

A pair of holder brackets 53 are provided at both ends of the front side bridge 52, and the pair of holder brackets 53 are fixed to the pair of holder plates 51. The pair of holder plates 51 protrude forward than the pair of seat frames 14, and the pair of holder brackets 53 protrude forward than the pair of holder plates 51. The front side bridge 52 is positioned forward than the seat frame 14 by the pair of holder brackets 53 and the pair of holder plates 51. The front side bridge 52 is curved forward from the pair of holder brackets 53 on an outer side in the vehicle width direction toward an inner side in the vehicle width direction so as not to interfere with a lower front side of the battery 60.

The front side bridge 52 is provided with a pair of battery brackets 54 and a pair of motor brackets 55 spaced apart in the vehicle width direction. The pair of battery brackets 54 protrude upward from the front side bridge 52 to support the battery 60 from below, and the pair of motor brackets 55 protrude downward from the front side bridge 52 to support the motor 43 from above. Base end portions of the brackets 54, 55 are joined to a surface of the front side bridge 52, and tip end portions of the brackets 54, 55 have mounting holes for screwing. The pair of battery brackets 54 support the battery 60 near a center of the front side bridge 52, and the pair of motor brackets 55 support the motor 43 on the outer side in the vehicle width direction of the pair of battery brackets 54. The pair of support frames 15 are connected via a rear side bridge 56 that extends in the vehicle width direction on a rear side of the battery 60.

The battery case 61 of the battery 60 has a left and right split structure, and includes a case half body 62 on a left side and a case half body 63 on a right side. The case half body 62 on the left side is formed in a box shape with a right side opened, and the case half body 63 on the right side is formed in a box shape with a left side opened. The case half body 62 on the left side is positioned to a left side of the accommodation space, and the case half body 63 on the right side is positioned at a center of the accommodation space. A total dimension of the left and right case half bodies 62, 63 in the vehicle width direction is smaller than dimensions of the case half bodies 62, 63 in a vehicle length direction and a height direction. The battery 60 is mounted on the vehicle body frame 10 such that a lateral direction is oriented in the vehicle width direction.

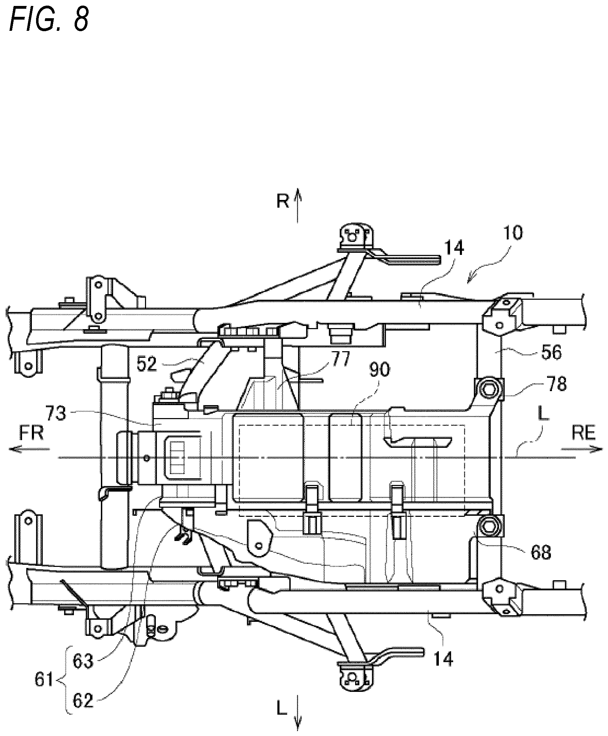

A front surface of the case half body 62 on the left side is inclined such that a dimension in the vehicle width direction increases from the vehicle front side toward the vehicle rear side. A pair of high voltage harness connectors 64 are provided on the front surface of the case half body 62 on the left side. A fuse cover (cover member) 65 is attached to a lower portion on a left side surface of the case half body 62 on the left side. A left side case fixing portion (case fixing portion) 66 is formed in the vicinity of the fuse cover 65 on the left side surface of the case half body 62, and the left side case fixing portion 66 is fixed to the support frame 15 on the left side via a left side bracket 67. A rear side case fixing portion 68 (see Fig. 8) protrudes rearward from a rear surface of the case half body 62, and the rear side case fixing portion 68 is fixed to the rear side bridge 56.

From a front surface of the battery 60, a vicinity of mating surfaces of the left case half body 62 and the right case half body 63 protrudes forward to form a vertically long protruding portion 71. A seat connecting portion 72 protrudes forward from an upper portion of a front surface of the case half body 63 on the right side, and a front side case fixing portion 73 protrudes forward from a lower portion of the front surface of the case half body 63. A partition wall 74 that divides a space on a right side of the protruding portion 71 into an upper space and a lower space is formed in a central portion of the front surface of the case half body 63. A low voltage harness connector 75 is provided on a right side surface of the protruding portion 71 between the seat connecting portion 72 and the partition wall 74, and a high voltage harness connector 76 is provided on the right side surface of the protruding portion 71 between the partition wall 74 and the front side case fixing portion 73.

A seat hinge bracket (not shown) fixed to the seat 34 is swingably supported on the seat connecting portion 72. The seat 34 is supported from below by the battery 60 inside the seat frame cover 24 (see Fig. 1) via the seat hinge bracket. When the seat 34 is opened with a front end portion of the battery 60 as a fulcrum, the battery 60 inside the seat frame cover 24 is exposed to the outside. Since the seat connecting portion 72 is integrally formed in the case half body 63 on the right side, a supporting rigidity of the seat connecting portion 72 with respect to a downward load from the seat 34 is increased in a state where the seat 34 is opened.

The front side case fixing portion 73 is formed in a cylindrical shape with a mounting hole penetrating in the vehicle width direction. A long bolt is inserted into the mounting hole of the front side case fixing portion 73 and mounting holes of the pair of battery brackets 54, and the front side case fixing portion 73 is fixed to the pair of battery brackets 54 via the long bolt. A right side case fixing portion 77 protrudes rightward from a vicinity of the front side case fixing portion 73 on a right side surface of the case half body 63 on the right side, and a rear side case fixing portion 78 protrudes rightward from a vicinity of a rear end of the right side surface of the case half body 63 on the right side. The right side case fixing portion 77 is fixed to the holder plate 51 on the right side, and the rear side case fixing portion 78 is fixed to the rear side bridge 56.

Thus, the front side case fixing portion 73 and the rear side case fixing portions 68, 78 fixed at portions separated in the front-rear direction of the vehicle body frame 10 are formed on an outer surface of the battery case 61. The front side case fixing portion 73 is fixed to the front side bridge 52, the rear side case fixing portions 68, 78 are fixed to the rear side bridge 56, and the front side bridge 52 and the rear side bridge 56 separated in the front-rear direction of the vehicle body frame 10 are connected via the battery case 61. The front side bridge 52 and the rear side bridge 56 are integrated via the battery 60, and a rigidity of the vehicle body frame 10 with respect to a load in the front-rear direction is increased by a rigidity of the battery 60.

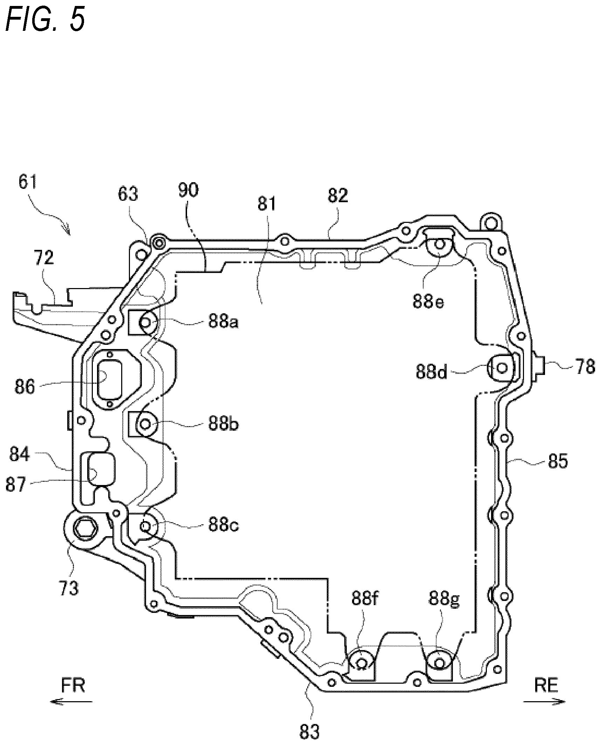

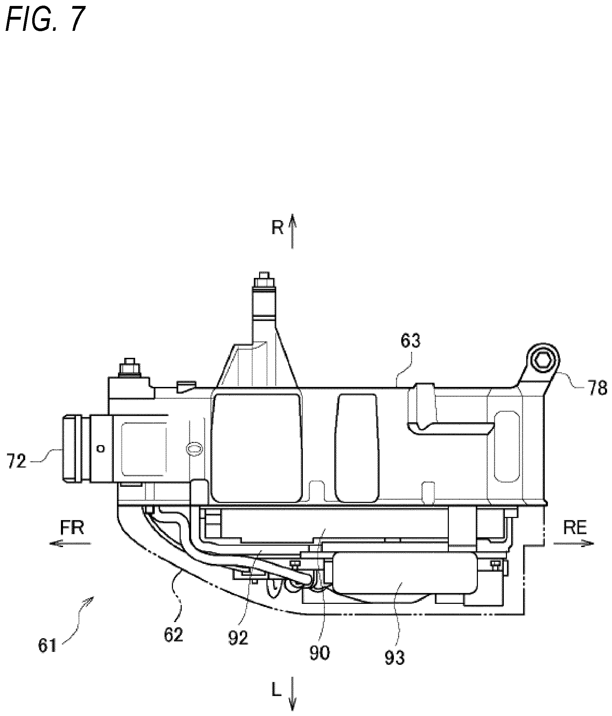

Hereinafter, a detailed configuration of the battery will be described with reference to Figs. 5 to 7. Fig. 5 is a left side view of the case half body on the right side according to the present embodiment. Fig. 6 is a left side view of the battery from which the case half body on the left side is detached according to the present embodiment. Fig. 7 is a plan view of the battery from which the case half body on the left side is detached according to the present embodiment.

As shown in Fig. 5, the case half body 63 on the right side includes a right side wall 81 that is wide in the upper-lower direction and the front-rear direction, an upper wall 82 that extends in the vehicle width direction from an outer edge of the right side wall 81, a bottom wall 83, a front wall 84, and a rear wall 85. On an inner surface of the right side wall 81, connector openings 86 and 87 for the harness connectors 75 and 76 (see Fig. 6) which are vertically spaced apart from each other are formed in the vicinity of the front wall 84, and front side module fixing portions 88a to 88c which are vertically disposed adjacent to the connector openings 86 and 87 are formed. On the inner surface of the right side wall 81, a rear side module fixing portion 88d is formed along the rear wall 85, an upper side module fixing portion 88e is formed along the upper wall 82, and lower side module fixing portions 88f, 88g are formed along the bottom wall 83.

Thus, on an inner surface of the case half body 63 on the right side, the front side module fixing portions 88a to 88c that fix a front side of the battery module 90 and the rear side module fixing portion 88d that fixes a rear side of the battery module 90 are formed. On the inner surface of the case half body 63, the upper side module fixing portion 88e that fixes an upper side of the battery module 90 and the lower side module fixing portions 88f, 88g that fix a lower side of the battery module 90 are formed. The battery module 90 is fixed to the case half body 63 on the right side over an entire circumference, and a rigidity of the case half body 63 with respect to a load in the front-rear direction and the upper-lower direction is increased by a rigidity of the battery module 90.

The front side module fixing portion 88a is formed on an opposite side of the seat connecting portion 72 with the front wall 84 interposed therebetween. The seat connecting portion 72 is reinforced by the rigidity of the battery module 90, and a rigidity of the seat connecting portion 72 with respect to a load from a seat 34 side is improved. The front side module fixing portion 88c is formed on an opposite side of the front side case fixing portion 73 with the front wall 84 interposed therebetween, and the rear side module fixing portion 88d is formed on an opposite side of the rear side case fixing portion 78 with the rear wall 85 interposed therebetween. The front side case fixing portion 73 and the rear side case fixing portion 78 are reinforced by the rigidity of the battery module 90, and a rigidity of a fixing position of the battery 60 with respect to the vehicle body frame 10 is increased.

As shown in Figs. 6 and 7, the battery module 90, various electronic components, and various circuit components are accommodated in the battery case 61. The battery module 90 is formed in a box shape in which a plurality of battery cells are electrically connected and a plurality of battery cells are stacked. The battery module 90 is charged with electric power for traveling. An outer edge of the battery module 90 is formed along a peripheral wall of the case half body 63, and is formed in a stepped shape in which a rear side of a lower edge is positioned below a front side of the lower edge of the battery module 90. The outer edge of the battery module 90 is provided with attachment portions 91a to 91g fixed to the respective module fixing portions 88a to 88g (see Fig. 5).

A right side of the battery module 90 is in contact with the right side wall 81 of the case half body 63 on the right side via a heat transfer seat (not shown). A left side of the battery module 90 protrudes leftward from the case half body 63, and a plate-shaped module bracket 92 is positioned on a left side of the battery module 90. The module bracket 92 is fixed to any number of the plurality of module fixing portions 88a to 88g (see Fig. 5) of the case half body 63 on the right side. An electronic component such as a battery control device 93 that controls the battery 60 and a relay that relays electric power, and a circuit component such as a fuse 94 to be cut by an overcurrent are attached to a left side surface of the module bracket 92.

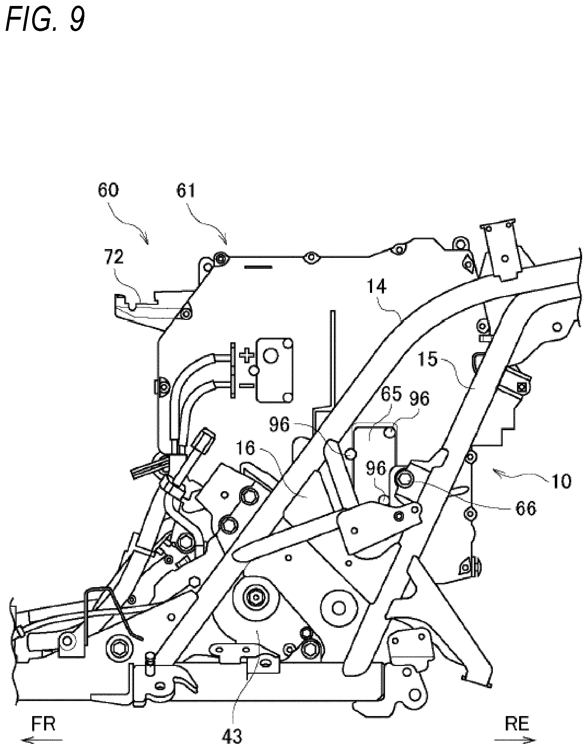

In a side view, the battery control device 93 is provided so as to overlap an upper side of a rear portion of the battery module 90, and the fuse 94 is provided so as to overlap a lower side of the rear portion of the battery module 90. The fuse 94 is positioned below the battery module 90 and is positioned on a rear side of the fuse cover 65 (see Fig. 9). In the side view, other electronic components and circuit components also overlap the battery module 90, and are installed inside a projection surface of a left side surface of the battery module 90. Therefore, the battery module 90, the electronic component, and the circuit component are compactly accommodated inside the battery case 61.

The electronic component and the circuit component on the module bracket 92 are covered by the case half body 62 on the left side. At this time, the battery module 90, which is a heavy object, the electronic component and the circuit component on the module bracket 92 are attached to the case half body 63 on the right side, and loads of the battery module 90, the electronic component, and the circuit component do not act on the case half body 62 on the left side. Therefore, the case half body 62 on the left side may be spaced apart from each component inside the case, and a degree of freedom in a shape of the case half body 62 on the left side is increased. It is also possible to prioritize weight reduction over a strength of the case half body 62.

A support structure of the battery will be described with reference to Fig. 8. Fig. 8 is a plan view of the vehicle body frame and the battery according to the present embodiment. Fig. 8 shows a state in which the electric device other than the battery is detached from the vehicle body frame.

As shown in Fig. 8, the front side case fixing portion 73 of the battery case 61 is fixed to the front side bridge 52 of the vehicle body frame 10, and the rear side case fixing portions 68, 78 of the battery case 61 are fixed to the rear side bridge 56 of the vehicle body frame 10. By connecting the front side bridge 52 and the rear side bridge 56 via the battery case 61, the rigidity of the vehicle body frame 10 is improved by a rigidity of the battery case 61. In order to further improve the rigidity of the vehicle body frame 10, it is necessary to increase the rigidity of the battery case 61 itself by utilizing the rigidity of the battery module 90 fixed inside the battery case 61.

Usually, the battery module 90 is fixed inside the battery case 61 with a buffer material interposed therebetween, and the battery module 90 is not directly fixed inside the battery case 61. In the present embodiment, the battery module 90 is directly fixed inside the battery case 61, and the battery case 61 is supported from inside by the battery module 90, so that the rigidity of the battery case 61 itself is increased. By utilizing the rigidity of the battery module 90, a material cost does not increase for increasing a material strength of the battery case 61. Assembling the buffer material to the battery case 61 becomes unnecessary, and an assembling work is simplified.

Since the heavy battery module 90 is accommodated inside the battery case 61, it is necessary to balance left and right weights in order to maintain a steering stability of the straddle-type vehicle 1. Therefore, the case half body 63 on the right side of the battery case 61 is positioned in a center, and the battery module 90 fixed to the case half body 63 overlaps a center line L extending in a vehicle front-rear direction together with the case half body 63. Left and right weight balances of the straddle-type vehicle 1 are brought close to uniform, the steering stability is improved, a restoring force when the straddle-type vehicle 1 is tilted to the left or right is brought close to uniform, and a turning performance during cornering is improved.

A fuse replacement operation will be described with reference to Figs. 9 and 10. Fig. 9 is a left side view of the vehicle body frame and the battery according to the present embodiment. Fig. 10 is a left side view in which a fuse cover is detached from Fig. 9.

As shown in Fig. 9, the battery case 61 is installed between the pair of seat frames 14 and the pair of support frames 15. In the side view, the pair of seat frames 14 extend obliquely upward from the vehicle front side toward the vehicle rear side so as to pass through a center of the battery 60. In the side view, the pair of support frames 15 extend obliquely upward from the vehicle front side toward the vehicle rear side so as to pass through a lower side of a rear portion of the battery case 61. The support frame 15 is connected to the seat frame 14 from a rear side of the battery case 61, and a lower side of the seat frame 14 and a lower side of the support frame 15 are connected via the pivot bracket 16.

An opening 95 (see Fig. 10) that exposes the fuse 94 (see Fig. 10) in the battery case 61 to the outside is formed in the battery case 61 (case half body 62). In the side view, the opening 95 is formed at a position avoiding the vehicle body frame 10, and the opening 95 is positioned inside the seat frame 14, the support frame 15, and the pivot bracket 16. Specifically, the opening 95 is positioned in a rear side of the pivot bracket 16 between the seat frame 14 and the support frame 15. The fuse cover 65 that covers the opening 95 is detachably attached to the battery case 61 by a plurality of small screws 96.

As shown in Fig. 10, an entry path of a tool such as a screwdriver is ensured among the seat frame 14, the support frame 15, and the pivot bracket 16. When the small screw 96 (see Fig. 9) of the fuse cover 65 is removed using the tool, the fuse 94 in the battery case 61 is exposed to the outside through the opening 95. When the fuse 94 is cut, the fuse 94 in the battery case 61 can be replaced through the opening 95. At this time, since the fuse 94 can be easily replaced in a state where the battery case 61 is fixed to the vehicle body frame 10, a work load of a replacement operation of the fuse 94 can be reduced.

In addition to the replacement operation of the fuse 94, when detaching the electric device such as the motor 43 or the inverter 44 (see Fig. 2) from the vehicle body frame 10, a high voltage circuit can be easily cut off by detaching the fuse 94 first. Since the fuse 94 of the battery 60 can be easily replaced, the number of components can be reduced by substituting the fuse 94 without providing a service plug in the battery 60. Since the opening 95 is formed below the battery case 61, the seat 34 is sufficiently separated from the fuse 94 to which a high voltage is applied, and a safety of the rider seated on the seat 34 is ensured.

Although the fuse cover 65 (see Fig. 9) is mounted in the vicinity of the opening 95 of the battery case 61, a rigidity of a vicinity of the opening 95 of the battery case 61 is lower than that of other portions. A left side of the opening 95 of the battery case 61 is protected by the seat frame 14, the support frame 15, and the pivot bracket 16, and a strong external force does not directly act on the vicinity of the opening 95 of the battery case 61. Therefore, deformation in the vicinity of the opening 95 of the battery case 61 is prevented, and a sealing performance of the opening 95 is increased by the fuse cover 65. An O-ring 97 that increases the sealing performance is attached to an opening edge portion of the battery case 61.

The opening edge portion of the battery case 61 is fixed to the support frame 15 via the left side case fixing portion 66. The vicinity of the opening 95 is reinforced by the left side case fixing portion 66, the deformation in the vicinity of the opening 95 of the battery case 61 is prevented, and the sealing performance of the opening 95 is increased by the fuse cover 65. The left side case fixing portion 66 that supports the battery case 61 is used to reinforce the vicinity of the opening 95 of the battery case 61. It is not necessary to increase a material strength in the vicinity of the opening 95 of the battery case 61 or to increase a thickness in the vicinity of the opening 95 of the battery case 61, and a cost for increasing a strength in the vicinity of the opening 95 of the battery case 61 is reduced.

As described above, according to the present embodiment, by detaching the fuse cover 65 from a side of the vehicle body frame 10, the fuse 94 is exposed to the outside from the opening 95 of the battery case 61 in the side view. Even if the battery 60 is not detached from the vehicle body frame 10 at the time of cutting the fuse 94, the fuse 94 can be replaced through the opening 95 of the battery case 61 by detaching the fuse cover 65 from the battery case 61. Therefore, an operator can easily replace the fuse 94, and workability of the replacement operation of the fuse 94 can be improved. Although the rigidity in the vicinity of the opening 95 of the battery case 61 is reduced, since the battery 60 is protected from the outside by the vehicle body frame 10, a strong external force does not directly act on the vicinity of the opening 95 of the battery case 61.

The battery of the present embodiment is not limited to the straddle-type vehicle of the scooter type, and may be adopted in other types of straddle-type vehicles. The straddle-type vehicle is not limited to a motorcycle, and may be a vehicle in which a battery is installed below the seat.

In the present embodiment, the battery module is formed in a box shape, but the battery module is not particularly limited as long as the battery module has a shape capable of holding a plurality of battery cells.

In the present embodiment, the case half body on the left side is formed in a box shape, but the case half body on the left side may be formed in a flat plate shape.

In the present embodiment, the battery module is fixed to the case half body on the right side, but the battery module may be fixed to the case half body on the left side. In this case, the case half body on the right side is positioned to a right side of the accommodation space, and the case half body on the left side is positioned at a center of the accommodation space.

In the present embodiment, the battery case is formed with the opening that exposes the fuse, but the battery case may be formed with an opening that exposes other circuit components such as a relay and a current sensor.

In the present embodiment, the left side case fixing portion is provided at the opening edge portion of the battery case, but the case fixing portion may not be provided at the opening edge portion of the battery case.

In the present embodiment, the vehicle body frame includes a pair of seat frames and a pair of support frames, but the vehicle body frame may have at least a pair of seat frames.

In the present embodiment, the battery is fixed to the vehicle body frame, but a battery holder may be fixed to the vehicle body frame, and the battery may be detachably attached to the battery holder.

As described above, the battery (60) according to the invention is a battery fixed inside the vehicle body frame (10) of the electric straddle-type vehicle (1), and the battery includes: the battery module (90) to which electric power for traveling is charged; the circuit component (fuse 94) connected to the battery module; and the battery case (61) accommodating the battery module and the circuit component, in which the opening (95) that exposes the circuit component to the outside is formed in the battery case, and the cover member (fuse cover 65) that covers the opening is detachably attached to the battery case, and the opening is formed at the position avoiding the vehicle body frame in the side view.

According to this configuration, when the cover member is detached from the side of the vehicle body frame, the circuit component is exposed to the outside from the opening of the battery case in the side view. Even if the battery is not detached from the vehicle body frame at the time of the breakage of the circuit component, the circuit component can be replaced through the opening of the battery case by detaching the cover member from the battery case. Therefore, the operator can easily replace the circuit component, and the workability of the replacement operation of the circuit component can be improved. Although the rigidity in the vicinity of the opening of the battery case is reduced, since the battery is protected from the outside by the vehicle body frame, the strong external force does not directly act on the vicinity of the opening of the battery case.

In the battery according to the invention, the vehicle body frame includes the upper side frame (seat frame 14) and the lower side frame (support frame 15) extending at a side of the battery case, and the opening is positioned between the upper side frame and the lower side frame. According to this configuration, the entry path of the tool is ensured between the upper side frame and the lower side frame, the cover member is detached using the tool, and the circuit component can be replaced through the opening of the battery case. Since the battery is protected from the outside by the upper side frame and the lower side frame, the strong external force does not directly act on the vicinity of the opening of the battery case.

In the battery of the present embodiment, the case fixing portion (left side case fixing portion 66) fixed to the vehicle body frame is formed at an opening edge portion of the opening. According to this configuration, the rigidity in the vicinity of the opening can be increased by the case fixing portion, and deformation of the battery case can be prevented.

In the battery of the present embodiment, the circuit component is the fuse (94) that is cut by the overcurrent. According to this configuration, even if the battery is not detached from the vehicle body frame at the time of cutting the fuse, the fuse can be replaced through the opening of the battery case. The number of components can be reduced by substituting the fuse without providing the service plug in the battery.

Although the present embodiment has been described, the above-described embodiment and modifications may be combined entirely or partially as another embodiment.

Accordingly, the claims cover all embodiments that may be included within the scope of the technical concepts.

### REFERENCE SIGNS LIST

- 1:: straddle-type vehicle
- 10:: vehicle body frame
- 14:: seat frame (upper side frame)
- 15:: support frame (lower side frame)
- 60:: battery
- 61:: battery case
- 65:: fuse cover
- 66:: left side case fixing portion (case fixing portion)
- 90:: battery module
- 94:: fuse (circuit component)
- 95:: opening

## Claims

1. An electric straddle-type vehicle (1) comprising:
a vehicle body frame (10) of the electric straddle-type vehicle (1); and
a battery (60), to be fixed inside the vehicle body frame (10),
the battery (60) comprises:
a battery module (90) to which electric power for traveling is charged;
a circuit component (94) connected to the battery module (90); and
a battery case (61) accommodating the battery module (90) and the circuit component (94), wherein
the battery case (61) is formed with an opening (95) that exposes the circuit component (94) to an outside, and a cover member (65) that covers the opening is detachably attached to the battery case (61),
the opening (95) is formed at a position avoiding the vehicle body frame (10) in a side view of the electric straddle-type vehicle (1),
**characterized in that** the thr vehicle body frame (10) includes an upper side frame (14) and a lower side frame (15) that extend at a side of the battery case (61), and
the opening (95) is positioned between the upper side frame (14) and the lower side frame (15).

2. The electric straddle-type vehicle (1) according to claim 1, wherein
a case fixing portion (66) configured to be fixed to the vehicle body frame (10) is formed at an opening edge portion of the opening (95).

3. The electric straddle-type vehicle (1) according to claim 1 or 2, wherein
the circuit component (94) is a fuse configured to be cut by an overcurrent.

## Patentansprüche

1. Elektrisches Zweiradfahrzeug (1), umfassend:
einen Fahrzeugkarosserierahmen (10) des elektrischen Zweiradfahrzeugs (1); und
eine Batterie (60), die innerhalb des Fahrzeugkarosserierahmens (10) zu befestigen ist,
wobei die Batterie (60) umfasst:
ein Batteriemodul (90), in das elektrische Energie zum Fahren geladen wird;
eine Schaltungskomponente (94), die mit dem Batteriemodul (90) verbunden ist; und
ein Batteriegehäuse (61), das das Batteriemodul (90) und die Schaltungskomponente (94) aufnimmt, wobei
das Batteriegehäuse (61) mit einer Öffnung (95) ausgebildet ist, die die Schaltungskomponente (94) nach außen freilegt, und ein Abdeckelement (65), das die Öffnung abdeckt, lösbar an dem Batteriegehäuse (61) angebracht ist,
die Öffnung (95) in einer Seitenansicht des elektrischen Zweiradfahrzeugs (1) in einer den Karosserierahmen (10) vermeidenden Position ausgebildet ist,
**dadurch gekennzeichnet, dass** der Fahrzeugkarosserierahmen (10) einen oberen Seitenrahmen (14) und einen unteren Seitenrahmen (15) beinhaltet, die sich auf einer Seite des Batteriegehäuses (61) erstrecken, und
die Öffnung (95) zwischen dem oberen Seitenrahmen (14) und dem unteren Seitenrahmen (15) positioniert ist.

2. Elektrisches Zweiradfahrzeug (1) nach Anspruch 1, wobei
ein Gehäusebefestigungsabschnitt (66), der dazu ausgelegt ist, an dem Fahrzeugkarosserierahmen (10) befestigt zu werden, an einem Öffnungsrandabschnitt der Öffnung (95) ausgebildet ist.

3. Elektrisches Zweiradfahrzeug (1) nach Anspruch 1 oder 2, wobei
die Schaltungskomponente (94) eine Sicherung ist, die so ausgelegt ist, dass sie durch einen Überstrom unterbrochen wird.

## Revendications

1. Véhicule électrique de type à enfourcher (1) comprenant :
un châssis de carrosserie de véhicule (10) du véhicule électrique de type à enfourcher (1) ; et
une batterie (60), à fixer à l'intérieur du châssis de carrosserie de véhicule (10),
la batterie (60) comprend :
un module de batterie (90) dans lequel de l'énergie électrique pour le déplacement est chargée ;
un composant de circuit (94) connecté au module de batterie (90) ; et
un boîtier de batterie (61) recevant le module de batterie (90) et le composant de circuit (94), dans lequel
le boîtier de batterie (61) est formé avec une ouverture (95) qui expose le composant de circuit (94) à l'extérieur, et un élément de couvercle (65) qui recouvre l'ouverture est fixé de manière amovible au boîtier de batterie (61),
l'ouverture (95) est formée dans une position évitant le châssis de carrosserie de véhicule (10) dans une vue latérale du véhicule électrique de type à enfourcher (1),
**caractérisé en ce que** le châssis de carrosserie de véhicule (10) comporte un châssis latéral supérieur (14) et un châssis latéral inférieur (15) qui s'étendent sur un côté du boîtier de batterie (61), et
l'ouverture (95) est positionnée entre le châssis latéral supérieur (14) et le châssis latéral inférieur (15).

2. Véhicule électrique de type à enfourcher (1) selon la revendication 1, dans lequel
une partie de fixation de boîtier (66) configurée pour être fixée au châssis de carrosserie de véhicule (10) est formée au niveau d'une partie de bord d'ouverture de l'ouverture (95).

3. Véhicule électrique de type à enfourcher (1) selon la revendication 1 ou 2, dans lequel
le composant de circuit (94) est un fusible configuré pour être coupé par une surintensité.
